# EUROPÄISCHE PATENTSCHRIFT

(11) **EP 0 602 471 B1**
(45) Veröffentlichungstag und Bekanntmachung des Hinweises auf die Patenterteilung: **03.09.1997**
(21) Anmeldenummer: 93119483.1
(22) Anmeldetag: 03.12.1993
(51) Int. Cl.: D03D 27/10, D03D 15/00

(54) **In einzelne Bänder einer Doppelpolware zerschneidbares textiles Flächengebilde für Composite**
Flat textile structure for composite material, apt to be cut in separate strips of double pile fabric
Structure textile plane pour matériau composite pouvant être découpée en bandes d'étoffe à poils double

(30) Priorität: 12.12.1992 DE 9216938 U
(43) Veröffentlichungstag der Anmeldung: 22.06.1994
(73) Patentinhaber: PARABEAM Industrie- en Handelsonderneming B.V., NL-5705 AL Helmond (NL)
(72) Erfinder: Scholten, Ludwig J.H., NL-6029 RD Sterksel (NL); Meerding, Klaas F. H., NL-5701 PA Helmond (NL)
(74) Vertreter: Henseler, Daniela, Dr.

(56) Entgegenhaltungen:
- EP-A- 0 320 715
- FR-A- 2 425 487
- GB-A- 2 109 024
- US-A- 4 680 213

## Beschreibung

Die Erfindung betrifft ein in einzelne Bänder einer Doppelpolware zerschneidbares textiles Flächengebilde für Composite nach dem Oberbegriff des Anspruchs 1.

Derartige textile Flächengebilde aus einer Doppelpolware, insbesondere aus einer unaufgeschnittenen Veloursware, werden verstärkt zu CompositeMaterialien verarbeitet, die ein weites Anwendungsfeld besitzen. Je nach Einsatzzweck werden in der Breite und Länge variierende Flächengebilde benötigt. Eine gewünschte Breite wird üblicherweise durch Schneiden aus einer vorgegebenen Herstellungsbreite, z.B. der Webbreite, erzielt, da ein genaues Weben der gewünschten Breite aufwendig und teuer ist.

Für die Herstellung von Kunststoffhohlkörpern, wie Tanks, werden derzeit Wicklungen aus Bändern einer Doppelware mit einer Breite vorzugsweise zwischen 5 und 150 cm benötigt. Während die Länge recht einfach einstellbar ist, ist die Webbreite ein Mehrfaches der Breite der Bänder, so daß aus einer Webbreite mehrere Bänder geschnitten werden müssen. Die Schnittkanten neigen dazu, dabei auszufransen, was zu unsauberen Schnittkanten führt. Gerade für Wicklungen werden aber saubere Schnittkanten benötigt.

Aus der EP-0 320 715 A2 ist ein Doppelgewebe bekannt, dessen Fasern oder Garne aus mindestens einem unter Wärme sich verfestigenden Polymer bestehen. Durch eine anschließende Temperaturbehandlung verfestigt sich ein solches Gewebe. Nachteilig hierbei ist die Notwendigkeit des Einsatzes von Spezialgarnen für das gesamte Doppelgewebe. Ferner erfährt das Doppelgewebe eine Strukturveränderung durch den Verfestigungsprozeß, wodurch die ursprünglichen Gewebeeigenschaften, wie deren Drappier- und Wickelbarkeit verlorengehen.

Aus der FR-2 425 487 ist ein Flachgewebe, insbesondere aus Glasfasern, bekannt, bei dem einzelne Glasfaserfäden im Gewebe ersetzt sind durch unter Wärme schmelzbare Fäden; um nach deren Erweichung eine Verbindung der Kett- und Schußfäden zu erreichen. Die Erweichung der schmelzbaren Fäden führt jedoch zu einer Störung des Gewebeaufbaus, so daß die Gewebeeigenschaften stark verändert werden.

Aufgabe der vorliegenden Erfindung ist es daher, ein in einzelne Bänder einer Doppelpolware zerschneidbares textiles Flächengebilde für Composite nach dem Oberbegriff des Anspruchs 1 zu schaffen, das ein Zerschneiden in Bänder mit verringerter Ausfransneigung der Bandkanten unter Beibehaltung des Gewebeaufbaus der Doppelpolware erlaubt.

Diese Aufgabe wird gemäß dem kennzeichnenden Teil des Anspruchs 1 gelöst.

Hierdurch wird ein in einzelne Bänder einer Doppelpolware zerschneidbares textiles Flächengebilde für Composite geschaffen, das mittels eines in die Ober- und Unterware eingetragenen und unter Wärmeeinwirkung an- und/oder aufschmelzbaren Fasermaterials ausfransarme Schnittlinien entlang wählbarer Teilbreiten einer vorgegebenen Textilbreite ermöglicht. Dieses thermofixierbare Fasermaterial mit einem Schmelzpunkt, der niedriger ist als der der übrigen synthetischen Fasern, bewirkt ein Verkleben mit den aus synthetischen Fasern bestehenden Kett- bzw. Schußfäden der Ober- und Unterware. Die Folge ist ein Blockieren der synthetischen Fasern im Bereich der thermoplastischen Fasern. Dadurch werden in Kett- bzw. Schußrichtung verlaufende Schnittkanten verfestigt. Bevorzugt liegen thermoplastische Fasern in Schußfadenfächern der Ober- und Unterware, d.h. sind als Schußfäden zusammen mit Schußfäden aus synthetischen Fasern oder als kombinierte Schußfäden aus thermoplastischen und synthetischen Fasern angeordnet. Schnittlinien, die im wesentlichen in Kettrichtung verlaufen, führen dann dazu, daß der oder die jeweils entlang der Schnittkanten liegenden Kettfäden von nach Wärmebehandlung verklebten Schußfäden in der Ober- und Unterware gehalten werden und dort regelrecht arretiert sind.

Die Beabstandung der mit thermoplastischen Fasern ausgestatteten Webfadenfächer voneinander ermöglicht eine gute Haftung mit einer Polymer-Matrix bei der Verarbeitung des textilen Flächengebildes zu Compositen, obwohl thermoplastische Bereiche den Angriff der Matrix sonst negativ beeinflussen. Die Beabstandung gewährleistet außerdem eine gute Drapierbarkeit einer textilen Ware, die durch Thermofixierung verklebte Kreuzungspunkte und damit einzelne starre Elemente enthält.

In die Verklebungsbereiche können auch die zwischen Ober- und Unterware hin- und herwechselnden Polfäden einbezogen werden, indem die Einbindung der Polfäden unter Umschlingen von Schußfäden aus thermoplastischen Fasern erfolgt. Ein Herausspringen der Polfäden aus der Ober- und Unterware entlang einer Schnittkante wird so vermieden.

Um ausfransarme Schnittlinien auch in Schußrichtung zu erreichen, können ebenfalls Kettfäden aus thermoplastischen Fasern mit einem niedrigeren Schmelzpunkt zusammen mit mindestens einem Kettfaden aus synthetischen Fasern mit höherem Schmelzpunkt eingetragen sein.

Der mindestens eine mit den thermoplastischen Fasern eingetragene Faden aus synthetischen Fasern kann eine geringere Garnstärke als die übrigen die textile Ober- und Unterware im wesentlichen aufbauenden Fäden besitzen, damit die die textile Ware insgesamt aufbauenden Fäden gleiche oder sehr ähnliche Durchmesser besitzen können. Trotz Anordnung thermoplastischer Fasern kann so ein recht gleichmäßiger Aufbau der textilen Ware, insbesondere der Außenseiten der Ober- und Unterware, erreicht werden. Das eingetragene thermoplastische Fasermaterial führt dann auch zu keinen unerwünschten Gewichtsverschiebungen. Dabei können die synthetischen Fasern mit höherem Schmelzpunkt jeweils eine Seele in einem Mantel aus thermoplastischen Fasern bilden.

In die entlang einer vorgebenene Textilschnittlänge liegenden Webfächer wird vorzugsweise nur in jedes dritte bis fünfte Webfach eine Faserkombination aus synthetischen Fasern mit höherem Schmelzpunkt und thermoplastischen Fasern mit niedrigerem Schmelzpunkt eingebracht, da auch weiter auseinander liegende Verklebungsstellen ausreichen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine Draufsicht auf ein erstes Ausführungsbeispiel eines in zwei Teile geschnittenen textilen Flächengebildes,
Fig. 2 zeigt schematisch einen Teilschnitt in Kettrichtung des textilen Flächengebildes gemäß Fig. 1,
Fig. 3 zeigt schematisch einen Teilschnitt in Kettrichtung eines textilen Flächengebildes gemäß eines zweiten Ausführungsbeispiels.

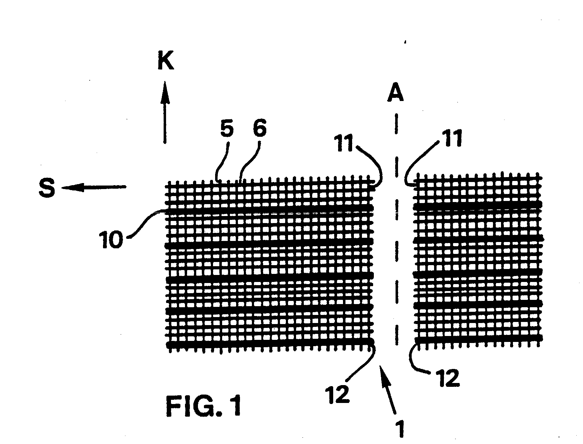

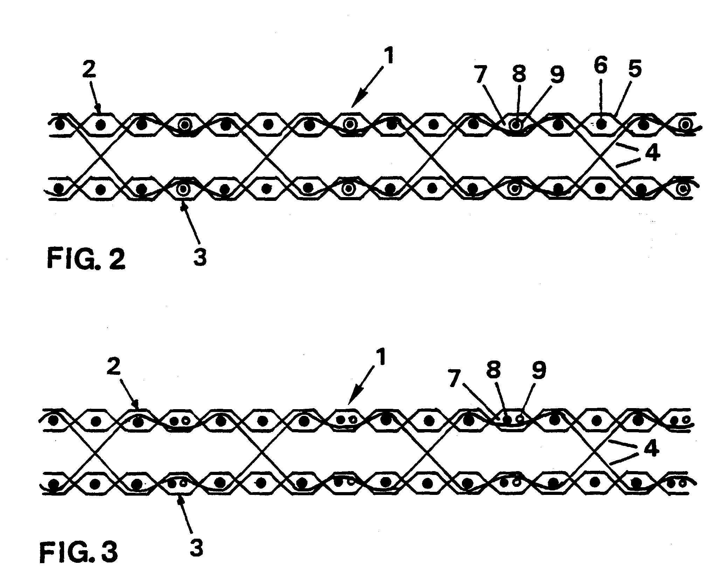

Fig. 1 und Fig. 2 zeigen schematisch ein erstes Ausführungsbeispiel eines in einzelne Bänder einer Doppelpolware zerschneidbares textiles Flächengebilde 1, dessen einzelne Bänder mit einer aushärtbaren Polymermatrix durchtränkbar sind zur Bildung von Compositen.

Das textile Flächengebilde 1 wird von einem unaufgeschnittenen Doppelpolgewebe mit einer Oberware 2 und einer Unterware 3 sowie dazwischen hin- und herwechselnden Polfäden 4 gebildet. Ober- und Unterware 2 und 3 umfassen in bekannter Weise miteinander verkreuzte Kettfäden 5 und Schußfäden 6, die hier in einer Leinwandbindung verkreuzt sind. Andere, Fadenflottungen aufweisende Grundbindungen sind jedoch ebenfalls einsetzbar.

Die Kettfäden 5 und Schußfäden 6 bestehen aus synthetischen Fasern mit einem ersten Schmelzpunkt und besitzen mindestens einen ersten Garntiter. Entlang eined wählbaren Schnittbereichs ist in eine Anzahl von Schußfadenfächern 7 der Oberware 2 als auch der Unterware 3 jeweils mindestens ein Schußfaden aus diesen synthetischen Fasern 8 mit dem ersten Schmelzpunkt zusammen mit thermoplastischen Fasern 9 mit einem zweiten Schmelzpunkt eingetragen. Der erste Schmelzpunkt der synthetischen Fasern ist dabei höher als der zweite Schmelzpunkt der thermoplastischen Fasern. Der Schmelzpunktunterschied ist so gewählt, daß beim Thermofixieren die synthetischen Fasern mit dem höheren Schmelzpunkt nicht anschmelzen.

Die in die Schußfadenfächer 7 eingetragenen Schußfäden aus synthetischen Fasern 8 können mit den thermoplastischen Fasern 9 zu einem gemeinsamen Faden 10 mixiert sein, wie in Fig. 1 und Fig. 2 dargestellt. Die thermoplastischen Fasern 9 können aber auch als separater Faden nach Art einer Panama-Bindung neben dem Schußfaden aus hochfesten Fasern 8 in jeweils ein und demselben Schußfadenfach 7 nebeneinander eingelegt sein, wie in einem zweiten Ausführungsbeispiel gemäß Fig. 3 dargestellt. Die thermoplastischen Fasern 9 können als Stapelfasern, Multifilamente oder Monofilamente verarbeitet sein. Gleiches gilt für die Schußfäden 8 und die übrigen Schußfäden 6 und Kettfäden 5.

Die Anzahl der Schußfadenfächer 7 mit thermoplastischen Fasern 9 ist wählbar, wobei allerdings zwischen jeweils zwei Schußfadenfächern 7 mit eingetragenen thermoplastischen Fasern 9 mindestens ein Schußfadenfach ohne thermoplastische Fasern, d.h. nur synthetische Fasern sind als Schußfaden 6 eingetragen, liegt. Die Schußfadenfächer 7 liegen somit beabstandet zueinander. Vorzugsweise liegen jeweils 1 bis 10 Schußfäden 6 zwischen den Schußfächern 7 mit thermoplastischen Fasern, wobei die daraus resultierenden einzelnen Abstände zwischen jeweils zwei Schußfadenfächern 7 über eine Schnittlänge variieren können. Gemäß dem ersten Ausführungsbeispiel sind in jedes vierte Schußfadenfach neben den synthetischen Fasern mit höherem Schmelzpunkt auch thermoplastische Fasern 9 eingelegt. Besonders bevorzugt ist, daß in jeweils jedes dritte bis fünfte Schußfadenfach einer Textilschnittlänge thermoplastische Fasern 9 eingetragen sind.

Der Schußfaden 8, der zusammen mit thermoplastischen Fasern 9 in die Schußfadenfächer 7 eingetragen ist, kann einen zweiten Garntiter besitzen, der vorzugsweise kleiner ist als der erste Garntiter der anderen Kettfäden 5 und Schußfäden 6. Der zweite Garntiter beträgt hier nur 50% des ersten Garntiters, nämlich beispielsweise bei der Verwendung von Glasfasern 68 tex für die Schußfäden 6 ohne Zusatz von thermoplastischen Fasern und 34 tex für die Schußfäden 8 mit Zusatz thermoplastischer Fasern. Der zweite Garntiter kann insbesondere 30 bis 100 % des ersten Garntiters betragen, besonders bevorzugt 45 bis 55 %. Die die textile Ware aufbauenden Fäden 4, 5, 6 und 10 können dann gleiche oder ähnliche Durchmesser haben.

Gemäß dem in Fig. 1 und Fig. 2 dargestellten Ausführungsbeispiel besitzen alle Schußfäden 6 und Kettfäden 5 auch den gleichen Garntiter und definieren damit einen ersten Garntiter. Es kann jedoch auch vorgesehen sein, daß insbesondere die Kettfäden 5 einen weiteren, von dem ersten und zweiten Garntiter verschiedenen Garntiter aufweisen.

Der Gewichtsanteil der thermoplastischen Fasern 9, der mit mindestens einem Schußfaden aus synthetischen Fasern 8 in ein Schußfadenfach 7 eingetragen ist, ist vorzugsweise höher als der Gewichtsanteil des Fadens 8. Bei dem genannten Beispiel wird der Faden 8 mit 34 tex und der Faden 9 mit 44 tex eingetragen.

Ober- und Unterware 2 und 3 sind durch in Kettrichtung eingewebte Polfäden 4 mit Abstand zueinander verbunden. Die Art der Einbindung der Polfäden 4 erfolgt hier in W-Bindung, kann aber auch in V-Bindung erfolgen. Die Einbindung der Polfäden 4 erfolgt dabei vorzugsweise so, daß mindestens ein mit thermoplastischen Fasern 9 kombiniert eingetragener Schußfaden 8 umschlungen wird. Die Zahl der Polfäden 4 pro m² sowie die Länge der Polfäden 4 kann an das zu erzielende Füllgeweicht und/oder die gewünschte Stützwirkung angepaßt werden. Gemäß der dargestellten Ausführungsbeispiele umschlingen zwei kreuzende Polfäden 4 jeweils 3 Schußfäden 6, 8 in einer W-Bindung, wobei die Länge der Polfäden 4 zwischen Ober- und Unterware 2 und 3 bei 4 bis 6 mm liegt, kann jedoch zwischen 1 und 50 mm variieren. Die Dichte der Polfäden liegt vorzugsweise zwischen 3 Millionen Polfäden/m² und 0,1 Millionen Polfäden/m².

Als synthetische Fasern mit einem ersten Schmelzpunkt sind Polyester oder hochfeste Fasern, wie beispielsweise Glas, Kohlenstoff oder Aramid, einsetzbar. Vorzugsweise ist das textile Flächengebilde bis auf die thermoplastischen Fasern 9 aus einer Faserart, insbesondere Glasfasern, aufgebaut.

Die thermoplastischen Fasern 9 mit einem zweiten Schmelzpunkt, der niedriger als der erste Schmelzpunkt ist, können insbesondere aus Polyethylen, Polyester oder Polypropylen bestehen.

Wie aus Fig. 1 ersichtlich, wo die Kettfadenrichtung durch einen Pfeil K und die Schußfadenrichtung durch einen Pfeil S angezeigt sind, werden bei im wesentlichen in Kettrichtung verlaufenden Schnittlinien (A) zum Zerschneiden des textilen Flächengebildes 1 in einzelne Bänder wählbarer Breite neben den Schußfäden 6 auch immer die Schußfäden 10 durchtrennt, und zwar unabhängig davon welche Breite für die Bänder gewählt wird. Darüberhinaus ist die Breite der Bändchen auch unabhängig von einer Herstellungsbreite der Textilware einstellbar.

Ist das textile Flächengebilde vor dem Zerschneiden einer thermischen Behandlung unterzogen worden, bei der die thermoplastischen Fasern 9 an- und/oder aufgeschmolzen wurden, so werden entlang wählbarer Schnittlinien (A) stets eine Anzahl verklebter Schußfäden 8 durchtrennt, die den jeweils zu äußerst liegenden Kettfaden 11 an Kreuzungspunkten 12 festhalten. Die Thermofixierung führt dazu, daß insbesondere bei einem aus hochfesten und thermoplastischen Fasern mixierten Schußfaden die hochfesten Fasern eine Seele bilden in einem thermoplastischen Mantelmaterial.

Sofern auch Schnittlinien in Schußrichtung S gelegt werden sollen, können auch in Kettrichtung thermoplastische Fasern zusammen mit synthetischen Kettfäden 11 eines höheren Schmelzpunktes in eine Anzahl von Kettfadenfächern, wie vorstehend für die Schußfadenfächer beschrieben, eingelegt werden.

## Patentansprüche

1. In einzelne Bänder einer Doppelpolware zerschneidbares textiles Flächengebilde für Composite mit Ober- und Unterware aus verkreuzten Kett- und Schußfäden aus einen ersten Schmelzpunkt aufweisenden synthetischen Fasern mindestens eines ersten Garntiters und mit eingelegten Polfäden, die die Ober- und Unterware beabstandet zueinander verbinden, dadurch gekennzeichnet, daß zum Bilden von verklebten Kreuzungspunkten (12) entlang wählbarer, im wesentlichen in Kettfadenrichtung (K) verlaufender Schnittlinien (A) thermoplastische Fasern (9) mit einem zweiten, gegenüber dem ersten tieferen Schmelzpunkt zusammen mit mindestens einem Faden aus synthetischen Fasern (8) mit dem ersten Schmelzpunkt in jeweils ein Webfach einer über eine Schnittlänge verteilt liegenden Anzahl von Webfächern (7) der Oberware (2) und der Unterware (3) eingetragen sind und zwischen jeweils zwei Webfächern (7) mit eingetragenen thermoplastischen Fasern (9) mindestens ein Webfach ohne thermoplastische Fasern liegt.

2. Textiles Flächengebilde nach Anspruch 1, dadurch gekennzeichnet, daß die Polfäden (4) derart eingelegt sind, daß sie bei jeder Einbindung in die Ober- und Unterware (2 und 3) zumindest auch einen Schußfaden (7) mit thermoplastischen Fasern (9, 10) umschlingen.

3. Textiles Flächengebilde nach Anspruch 1 oder 2, dadurch gekennzeichnet, daß in die Schußfaden- und/oder Kettfadenfächer thermoplastische Fasern (9) zusammen mit mindestens einem Schuß- und/oder Kettfaden aus synthetischen Fasern mit einem ersten Schmelzpunkt eingetragen sind.

4. Textiles Flächengebilde nach einem der Ansprüche 1 bis 3, dadurch gekennzeichnet, daß der mit thermoplastischen Fasern (9) in ein Kett- oder Schußfadenfach eingetragene Faden aus synthetischen Fasern (8) einen zweiten Garntiter besitzt, der geringer ist als der erste Garntiter der anderen Kettfäden (5) und/oder Schußfäden (6).

5. Textiles Flächengebilde nach einem der Ansprüche 1 bis 4, dadurch gekennzeichnet, daß entlang der Schnittlinie zwischen jeweils zwei Webfächer (7) mit thermoplastischen Fasern (9) 1 bis 10 Webfadenfächer ohne thermoplastische Fasern liegen.

6. Textiles Flächengebilde nach einem der Ansprüche 1 bis 5, dadurch gekennzeichnet, daß die thermoplastischen Fasern (9) und die synthetischen Fasern (8) des mindestens einen Fadens mit dem ersten Schmelzpunkt einen gemeinsamen Kett- bzw. Schußfaden (10) bilden.

7. Textiles Flächengebilde nach einem der Ansprüche 3 bis 6, dadurch gekennzeichnet, daß der zweite Garntiter des mit den thermoplastischen Fasern (9) eingetragenen mindestens einen Fadens (8) aus synthetischen Fasern 30 bis 100 %, vorzugsweise 45 bis 55%, des ersten Garntiters beträgt.

8. Textiles Flächengebilde nach einem der Ansprüche 1 bis 7, dadurch gekennzeichnet, daß der Gewichtsanteil der thermoplastischen Fasern (9) in dem jeweiligen Kett- oder Schußfadenfach (7) höher ist als der Gewichtsanteil der synthetischen Fasern des mindestens einen Fadens mit dem ersten Schmelzpunkt.

9. Textiles Flächengebilde nach einem der Ansprüche 1 bis 8, dadurch gekennzeichnet, daß ein Faden aus thermoplastischen Fasern (9) und ein Faden aus synthetischen Fasern (8) mit einem ersten Schmelzpunkt nebeneinanderliegend in Kett- bzw. Schußrichtung vorgesehen sind.

10. Textiles Flächengebilde nach einem der Ansprüche 1 bis 8 und einer Wärmebehandlung, dadurch gekennzeichnet, daß die synthetischen Fasern (8) eine Seele in einem Mantel aus thermoplastischen Fasern (9) bilden.

11. Textiles Flächengebilde nach einem der Ansprüche 1 bis 10, dadurch gekennzeichnet, daß in jedem dritten bis fünften Webfach (7) einer vorgegebenen Schnittlänge thermoplastische Fasern (9) vorgesehen sind.

12. Textiles Flächengebilde nach einem der Ansprüche 1 bis 11, dadurch gekennzeichnet, daß die thermoplastischen Fasern (9) aus Polyester, Polyethylen oder Polypropylen bestehen.

13. Textiles Flächengebilde nach einem der Ansprüche 1 bis 12, dadurch gekennzeichnet, daß die synthetischen Fasern mit einem ersten Schmelzpunkt aus Polyester oder hochfesten Fasern, wie insbesondere Glas, Kohlenstoff, Aramid, bestehen.

14. Textiles Flächengebilde nach einem der Ansprüche 1 bis 13, dadurch gekennzeichnet, daß der erste Schmelzpunkt mindestens 10°C über dem zweiten Schmelzpunkt liegt.

## Claims

1. A textile sheet material for composites that is cuttable into individual bands of a double pile material, comprising top and bottom cloths composed of crossing warp and weft threads composed of synthetic fibres of a first melting point and having at least one first yarn linear density and laid-in pile threads which join the top and bottom cloths together in spaced-apart fashion, characterized in that to form adhesively bonded-together cross-over points (12) along chooseable cutting lines (A) extending essentially in the warp thread direction (K) thermoplastic fibres (9) having a second melting point, which is lower than the first melting point, have been inserted together with at least one thread made of synthetic fibres (8) having the first melting point into one of a number of sheds (7) of the top cloth (2) and the bottom cloth (3) which are distributed along a cutting length and between any two sheds (7) with inserted thermoplastic fibres (9) there is at least one shed without thermoplastic fibres.

2. A textile sheet material according to Claim 1, characterized in that the pile threads (4) have been laid in such a way that at every point of interlacing into the top and bottom cloths (2 and 3) they also loop around at least one weft thread (7) comprising thermoplastic fibres (9, 10).

3. A textile sheet material according to Claim 1 or 2, characterized in that into the weft thread and/or warp thread sheds there have been inserted thermoplastic fibres (9) together with at least one weft and/or warp thread made of synthetic fibres having a first melting point.

4. A textile sheet material according to any one of claims 1 to 3, characterized in that the thread made of synthetic fibres (8) inserted into a warp or weft thread shed together with thermoplastic fibres (9) has a second yarn linear density which is lower than the first yarn linear density of the other warp threads (5) and/or weft threads (6).

5. A textile sheet material according to any one of claims 1 to 4, characterized in that along the cutting line from 1 to 10 weaving thread sheds without thermoplastic fibres are disposed between any two sheds (7) containing thermoplastic fibres (9).

6. A textile sheet material according to any one of claims 1 to 5, characterized in that the thermoplastic fibres (9) and the synthetic fibres (8) of the at least one thread having the first melting point form a common warp or weft thread (10).

7. A textile sheet material according to any one of claims 3 to 6, characterized in that the second yarn linear density of the at least one thread (8) made of synthetic fibres inserted with the thermoplastic fibres (9) is from 30 to 100%, preferably from 45 to 55%, of the first yarn linear density.

8. A textile sheet material according to any one of claims 1 to 7, characterized in that the weight proportion of the thermoplastic fibres (9) in the respective warp or weft thread shed (7) is higher than the weight proportion of the synthetic fibres of the at least one thread having the first melting point.

9. A textile sheet material according to any one of claims 1 to 8, characterized in that a thread made of thermoplastic fibres (9) and a thread made of synthetic fibres (8) having a first melting point are provided side by side in the warp or weft thread direction.

10. A textile sheet material according to any one of claims 1 to 8 and after a heat treatment, characterized in that the synthetic fibres (8) form a core within a sheath of thermoplastic fibres (9).

11. A textile sheet material according to any one of claims 1 to 10, characterized in that every third to fifth shed (7) of a given cutting length is provided with thermoplastic fibres (9).

12. A textile sheet material according to any one of claims 1 to 11, characterized in that the thermoplastic fibres (9) consist of polyester, polyethylene or polypropylene.

13. A textile sheet material according to any one of claims 1 to 12, characterized in that the synthetic fibres having a first melting point consist of polyester or high-strength fibres such as, in particular, glass, carbon, aramid.

14. A textile sheet material according to any one of claims 1 to 13, characterized in that the first melting point is at least 10°C above the second melting point.

## Revendications

1. Produit textile en nappe susceptible d'être découpé d'une marchandise à double fonture en bandes séparées pour des composites avec tissus de dessus et de dessous en fils de chaîne et de trame croisés en fibres synthétiques d'au moins un premier titre de fil et présentant un premier point de fusion, et avec des fils de tour insérés reliant le tissu de dessus et le tissu de dessous avec un écart entre les deux, caractérisé en ce que, pour la formation de points de jonction (12) collés le long de lignes de découpe (A) sélèctionnables et se développant essentiellement dans la direction du fil de chaîne (K), des fibres thermoplastiques (9), avec un deuxième point de fusion plus bas que le premier, conjointement avec au moins un fil en fibres synthétiques (8) avec le premier point de fusion sont insérés chacun dans un pas de chaîne d'une pluralité de pas de chaîne (7), répartis sur une longueur de coupe, du tissu de dessus (2) et du tissu de dessous (3), et qu'entre deux pas de chaîne (7) avec des fibres thermoplastiques (9) insérés se trouve chaque fois au moins un pas de chaîne sans fibres thermoplastiques.

2. Produit textile en nappe selon la revendication 1, caractérisé en ce que les fils de tour (4) sont agencés de manière à aussi entortiller au moins un fil de trame (7) avec des fibres thermoplastiques (9, 10) lorsqu'ils sont insérés dans les tissus de dessus et de dessous (2 et 3).

3. Produit textile en nappe selon les revendications 1 ou 2, caractérisé en ce que dans les pas de fil de trame et/ou de fil de chaîne sont insérés des fibres thermoplastiques (9) conjointement avec au moins un fil de trame et/ou de chaîne en fibres synthétiques avec un premier point de fusion.

4. Produit textile en nappe selon l'une des revendications 1 à 3, caractérisé en ce que ledit fil en fibres synthétiques (8) inséré avec des fibres thermoplastiques (9) dans un pas de fil de chaîne ou de trame possède un deuxième titre de fil qui est inférieur au premier titre de fil des autres fils de chaîne (5) et/ou fils de trame (6).

5. Produit textile en nappe selon l'une des revendications 1 à 4, caractérisé en ce que le long de la ligne de découpe entre deux pas de chaîne (7) avec des fils thermoplastiques (9) se trouvent chaque fois 1 à 10 pas de chaîne sans fibres thermoplastiques.

6. Produit textile en nappe selon l'une des revendications 1 à 5, caractérisé en ce que les fibres thermoplastiques (9) et les fibres synthétiques (8) dudit au moins un fil avec le premier point de fusion forment un même fil de chaîne, respectivement un même fil de trame (10).

7. Produit textile en nappe selon l'une des revendications 3 à 6, caractérisé en ce que le deuxième titre de fil dudit au moins un fil (8) en fibres synthétiques inséré avec les fibres thermoplastiques (9) s'élève à 30 à 100 %, de préférence 45 à 55 % du premier titre de fil.

8. Produit textile en nappe selon l'une des revendications 1 à 7, caractérisé en ce que le pourcentage du poids des fibres thermoplastiques (9) dans le pas de fil de chaîne ou de fil de trame (7) est supérieur au pourcentage du poids des fibres synthétiques dudit au moins un fil avec le premier point de fusion.

9. Produit textile en nappe selon l'une des revendications 1 à 8, caractérisé en ce que sont prévus un fil en fibres thermoplastiques (9) et un fil en fibres synthétiques (8) avec un premier point de fusion situés l'un à côté de l'autre dans la direction de la chaîne, respectivement dans la direction de la trame.

10. Produit textile en nappe selon l'une des revendications 1 à 8 et selon un traitement thermique, caractérisé en ce que les fibres synthétiques (8) forment une âme dans une enveloppe en fibres thermoplastiques (9).

11. Produit textile en nappe selon l'une des revendications 1 à 10, caractérisé en ce que des fibres thermoplastiques (9) sont prévus dans chaque troisième à cinquième pas de chaîne (7) d'une longueur de découpe prédéterminée.

12. Produit textile en nappe selon l'une des revendications 1 à 11, caractérisé en ce que les fibres themoplastiques (9) consiste en polyester, polyéthylène ou polypropylène.

13. Produit textile en nappe selon l'une des revendications 1 à 12, caractérisé en ce que les fibres synthétiques avec un premier point de fusion consistent en polyester ou en fibres à haute résistance, comme notamment du verre, du carbone, de l'aramide.

14. Produit textile en nappe selon l'une des revendications 1 à 13, caractérisé en ce que le premier point de fusion se trouve au moins 10°C au-dessus du deuxième point de fusion.
